# EUROPÄISCHE PATENTSCHRIFT

(11) **EP 2 288 485 B1**
(45) Veröffentlichungstag und Bekanntmachung des Hinweises auf die Patenterteilung: **12.06.2013**
(21) Anmeldenummer: 09730201.2
(22) Anmeldetag: 01.04.2009
(51) Int. Cl.: B29C 45/27

(54) **HEISSKANALDÜSE ZUR SEITENANSPRITZUNG**
HOT RUNNER NOZZLE FOR LATERAL SPRAYING
BUSE DE CANAL CHAUD POUR LA PULVÉRISATION LATÉRALE

(30) Priorität: 11.04.2008 DE 202008005073 U; 01.10.2008 DE 202008013086 U
(43) Veröffentlichungstag der Anmeldung: 02.03.2011
(73) Patentinhaber: EWIKON Heisskanalsysteme GmbH, 35066 Frankenberg (DE)
(72) Erfinder: BRAUN, Peter, 35410 Hungen (DE)
(74) Vertreter: Specht, Peter
(86) Internationale Anmeldenummer: PCT/EP2009/053866
(87) Internationale Veröffentlichungsnummer: WO 2009/124865

(56) Entgegenhaltungen:
- EP-A- 0 447 573
- EP-A- 0 743 159
- EP-A- 1 524 091
- EP-A- 1 941 984
- WO-A-2008/004968
- DE-U1- 29 902 185
- US-A- 4 094 447
- US-A- 5 474 439
- US-A- 5 536 165
- US-A- 5 736 171
- US-A1- 2006 222 730
- US-A1- 2008 044 513

## Beschreibung

Die Erfindung betrifft eine Heißkanaldüse zur Seitenanspritzung nach dem Oberbegriff des Anspruchs 1.

Zum technologischen Hintergrund seien zunächst die WO 99/37 461 A1, die US2002/0098262 A1 sowie die EP 0186 413 A2 genannt.

In der Kunststoff-Spritzgießtechnik ist es oft von Vorteil, Kunststoffteile seitlich, d.h. senkrecht oder schräg zur Entformungsrichtung anzuspritzen. Dazu werden sogenannte Heißkanaldüsen zur Seitenanspritzung, auch Seitenanspritzdüsen genannt, verwendet, die einen Düsenkörper und Spitzenelemente aufweisen. Um eine gute Temperaturführung für die Schmelze bis auf Artikeloberflächen zu erreichen, sind die Düsenspitzen bzw. die Spitzenelemente bis auf die Artikeloberfläche zu führen.

Es ist ferner bekannt und üblich, Formbauteile (Werkzeugbauteile), welche die Düsenkörper umschließen, zu teilen, damit bei Mehrkavitätenanordnungen die Düsenspitzen bzw. der Düsenkörper montierbar ist. Einen derartigen Stand der Technik zeigt die DE 100 08 471 A1. Die Teilung ist nachteilig, weil eine aufwändige Konstruktion des Werkzeuges für die notwendigen Zuhaltekräfte sorgen muss, um Leckagen zu verhindern.

Daher erscheinen Konstruktionen von Seitenanspritzdüsen mit Spitzenelementen günstig, die es ermöglichen, ungeteilte Einsätze zu verwenden. Dies kann z.B. mit einstellbaren Spüzenelementen - wie in der DE 197 42 099 A1 vorgeschlagen - geschehen, oder mit Hilfe eines nachträglichen Montierens der Spitzen in einen einteiligen Düsenkörper, nachdem der Düsenkörper montiert ist (siehe z.B. die EP 1524091A2 und die DE 103 45 578 A1). Bei den in engen Passungen gelagerten Spitzenelementen werden die Passungsspalte allerdings nach einer Zeit des Gebrauchs von verbranntem Kunststoff so fest gehalten, dass eine zerstörungsfreie Demontage oft nicht möglich ist.

Auch nach der WO 2008/004968 ist es bekannt, das Spitzen radial beweglich in einem mehrteiligen Düsenkörper gehalten sind.

Nachteile eines Verstellmechanismus sind die filigranen Bauteile, die zum Teil schmelzebenetzt werden und nach längerem Gebrauch keine zuverlässige Verstellung bzw. Demontage der Spitzen mehr erlauben. Die Verstelleinrichtungen lassen oft keine hohe Kraft/Druckbelastung zu, weil sie wegen dem begrenzten Bauraum nicht genügend Druckfläche aufzeigen.

Die in den einteiligen Düsenkörper montierbaren Spitzenelemente müssen dagegen in der Regel sehr klein ausgeführt werden, um montierbar zu bleiben Zudem ist die Montage/Demontage bei bekannten Systemen äußerst schwierig und bei längerem Gebrauch oft nur mit der Zerstörung der Spitzen zu erreichen.

Aus der gattungsgemäßen EP 0 447 573 A1 und der hierzu prioritätsbegründenden DE 90 03 574 ist es daher bekannt, den Düsenkörper an sich nicht einteilig sondern geteilt auszubilden, so dass diese Schwierigkeit verringert wird. Auf eine Art Basisteil (Fig. 1 der EP 0 447 573 A1) ist ein Haltering aufgesetzt, an dessen Axialseite wiederum Leitspitzen mit einem Klemmring gehalten sind. Die Montage und die Demontage der Spitzenelemente gestalten sich allerdings nach wie vor nicht einfach genug. Zudem wird der Schmelzefluss auch nicht leckagefrei vom Schmelzeeintritt in den Düsenkörper bis zum Anschnitt am Artikel geführt, denn die Schmelze kann auch axial aus dem Basisteil austreten und die Leitspitzen umströmen. Bei der Demontage der Spitzenelemente durch die umgebende erstarrte Kunststoffmasse können daher erhebliche Beschwemisse auftreten. Die erstarrte Kunststoffmasse muß zunächst mühsam entfernt werden, alternativ kann die heiße Düse mit noch teigigem Kunststoff demontiert werden.

Die Erfindung hat daher die Aufgabe, diesen gattungsgemäßen Stand der Technik - ausgehend von einem Konzept eines geteilten Düsenkörpers - derart weiterzuentwickeln, dass es möglich ist, auch relativ groß bauende Spitzenelemente in den Düsenkörper auf einfache Weise unterbringen zu können sowie diese einfach montieren und auch nach längerem Gebrauch wieder demontieren zu können.

Die Lösung dieses Problems ist die Aufgabe der Erfindung.

Die Erfindung löst diese Aufgabe durch den Gegenstand des Anspruchs 1.

Vorteilhafte Ausgestaltungen der Erfindung sind den Unteransprüchen zu entnehmen.

Die Erfindung schafft eine Heißkanaldüse, welche derart ausgelegt ist, dass die Spitzen leicht in einen zuvor in ein Werkzeug eingebauten mehrteiligen Düsenkörper eingesetzt werden können. Die gewählte Anordnung ermöglicht es, die Spitzenelemente relativ groß bauend auszulegen.

Die US 2005/0196486 zeigt ebenfalls einen einteiligen Düsenkörper mit einem einteilig daran angeformten Vorsprung, der in Figur 2 dieser Schrift zur Veranschaulichung eine andere Schraffur aufweist als der übrige Düsenkörper.

Nach der erfindungsgemäßen Lösung erreicht die wenigstens eine Spitze eines Spitzenelementes leicht die Oberfläche des zu spritzenden Artikels und nach einer Komplettmontage aller Bauteile wird der Schmelzefluss leckagefrei vom Schmelzeeintritt in den Düsenkörper bis zum Anschnitt am Artikel geführt.

Dabei lassen sich durch die gewählte Ausgestaltung des Düsenkörpers relativ große Zuhaltekräfte realisieren, so dass eine hohe Dichtigkeit erreicht wird.

Nach der Montage der Spitzeneinsätze liegen nach einer besonders bevorzugten Variante die Dichthülsen an der Wand des Werkzeugeinsatzes an, bzw. sind so weit beabstandet, dass nach Erreichen der Betriebstemperatur, durch die thermische Ausdehnung der Gesamtdüse, eine hinreichende Flächenpressung zwischen der Dichthülse und der Wandung des Werkzeugeinsatzes entsteht.

Nachfolgend wird die Erfindung anhand eines Ausführungsbeispiels unter Bezug auf die Zeichnung näher erläutert. Es zeigen:
- Fig. 1: eine perspektivische Ansicht einer Heißkanaldüse mit einem mehrteiligen Düsenkörper mit darin eingesetzten Spitzeneinsätzen;
- Fig. 2: einen Schnitt durch einen Teilbereich eines Werkzeugs mit einer Anordnung nach Art der Fig. 1;
- Fig. 3: eine perspektivische Ansicht eines Spitzeneinsatzes mit einem Spitzenelement und einer Dichthülse;
- Fig. 4: eine weitere perspektivische Ansicht des Spitzeneinsatzes;
- Fig. 5: einen Schnitt durch den Spitzeneinsatz aus Fig. 4;
- Fig. 6: eine perspektivische Ansicht eines Düsenkörper-Klemmscheibenabschnittes;
- Fig. 7: eine perspektivische Ansicht eines Düsenköper mit einem Düsenkörper-Basisabschnitt und einem Düsenkörper-Klemmscheibenabschnitt mit Befestigungsschrauben;
- Fig. 8: eine perspektivische Ansicht des Düsenkörper-Basisabschnitts aus Fig. 7 mit daran angeordneten Spitzeneinsätzen;
- Fig. 9a-e: die Demontage eines Düsenkörpers und eines Spitzeneinsatzes in fünf aufeinanderfolgenden Schritten;
- Fig. 10: die Heißkanaldüse aus Fig. 1 mit für eine winklige Seitenanspritzung ausgelegten Spitzeneinsätzen;
- Fig. 11: einen Schnitt durch einen Teilbereich eines Werkzeugs mit weiteren für eine winklige Seitenanspritzung ausgelegten Spitzeneinsätzen;
- Fig. 12: eine perspektivische Ansicht des Spitzeneinsatzes aus Fig. 10 mit einem Spitzenelement und einer Dichthülse;
- Fig. 13: die Elemente aus Fig. 12 im zusammengesetzten Zustand;
- Fig. 14a: eine teilgeschnittene perspektivische Ansicht durch einen weiteren Teilbereich eines weiteren Werkzeugs mit einem Spitzeneinsatz nach Art der Fig. 12 und 13;
- Fig. 14b: eine Ausschnittsvergrößerung aus Fig 14a;
- Fig. 15: einen Schnitt durch die Anordnung aus Fig. 14a;
- Fig. 16: eine Darstellung des Prinzips der Montage/Demontage der Spitzeneinsätze bei einer Anordnung nach Art der Fig. 14; und
- Fig. 17: eine perspektivische Darstellung einer weiteren Heißkanaldüse.

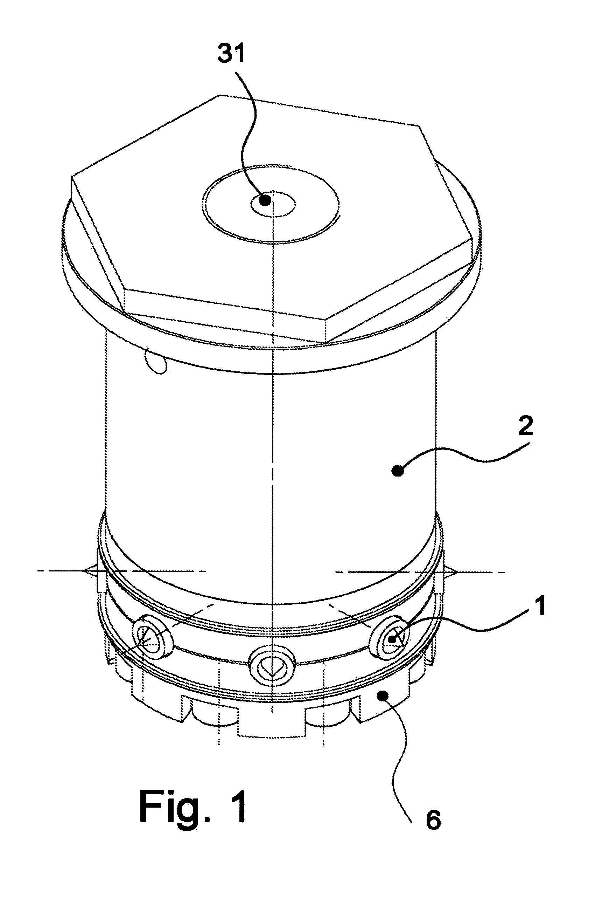

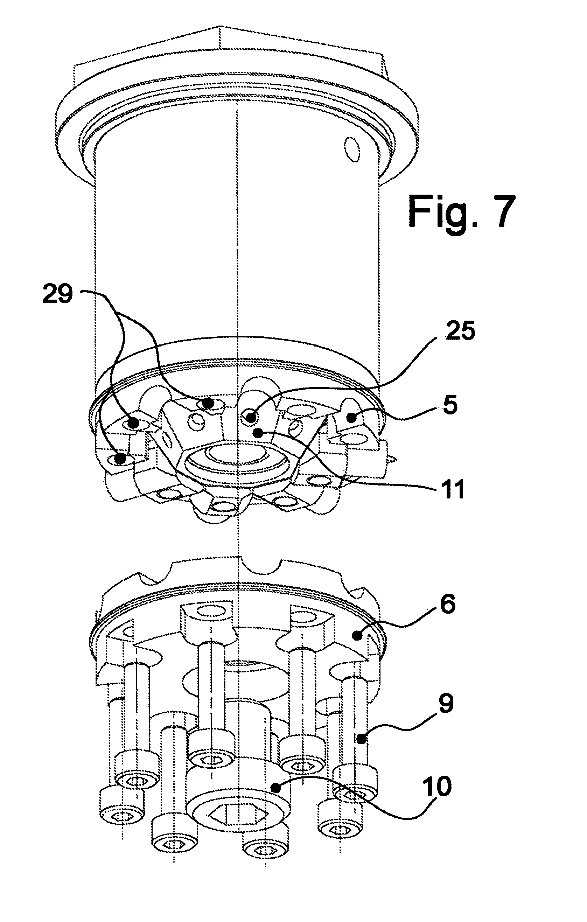

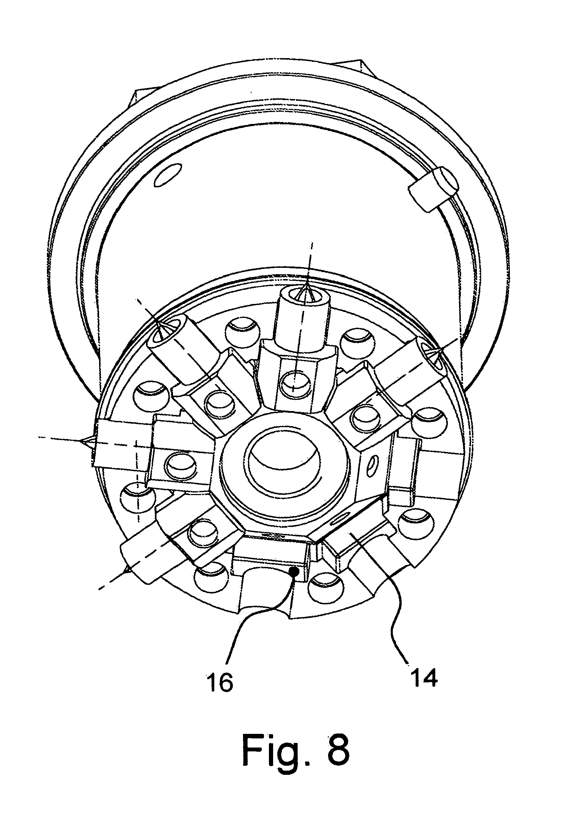

Fig. 1 zeigt eine Heißkanaldüse für die seitliche Anspritzung von Kunststoffbauteilen, die einen mehrteiligen Düsenkörper mit einem Düsenkörper-Basisabschnitt 2 und einem Düsenkörper-Klemmscheibenabschnitt 6 aufweist, wobei diese Elemente - siehe hierzu auch Fig. 7 und 8 - einen hier zylindrischen Außenmantel aufweisen und der Düsenkörper-Basisabschnitt 2 eine Axialseite aufweist, die mit wenigstens einer oder mehreren hier beispielhaft radial an der Axialseite umfangsverteilt angeordneten Ausnehmungen 5, 14 zum Anordnen und zur Aufnahme von Spitzeneinsätzen 37 versehen ist. Der Außenmantel könnte auch einen nichtkreisrunden Querschnitt aufweisen, so beispielsweise einen elliptischen, ovalen oder mehreckigen Querschnitt (hier nicht dargestellt).

Nach der beispielhaften Darstellung der Fig. 1 ist diese Axialseite die untere Axialseite. An dieser Axialseite ist wenigstens ein Spitzeneinsatz 37 mit wenigstens einem Spitzeelement 3 angeordnet, es können aber auch - wie in den Figuren dargestellt, mehrere Spitzeneinsätze 37 in dem mehrteiligen Düsenkörper gehalten sein.

In diesem Sinn ist die nachfolgende Beschreibung lediglich beispielhaft und nicht einschränkend zu verstehen, wenn die Lage von jeweils nur einem oder an anderen Stellen mehreren der Spitzenelemente 3 beschrieben ist. Auch Begriffe wie "oben" oder "unten" sind nicht einschränkend zu verstehen sondern beziehen sich lediglich auf die jeweilige Anordnung und Ausrichtung in den Figuren.

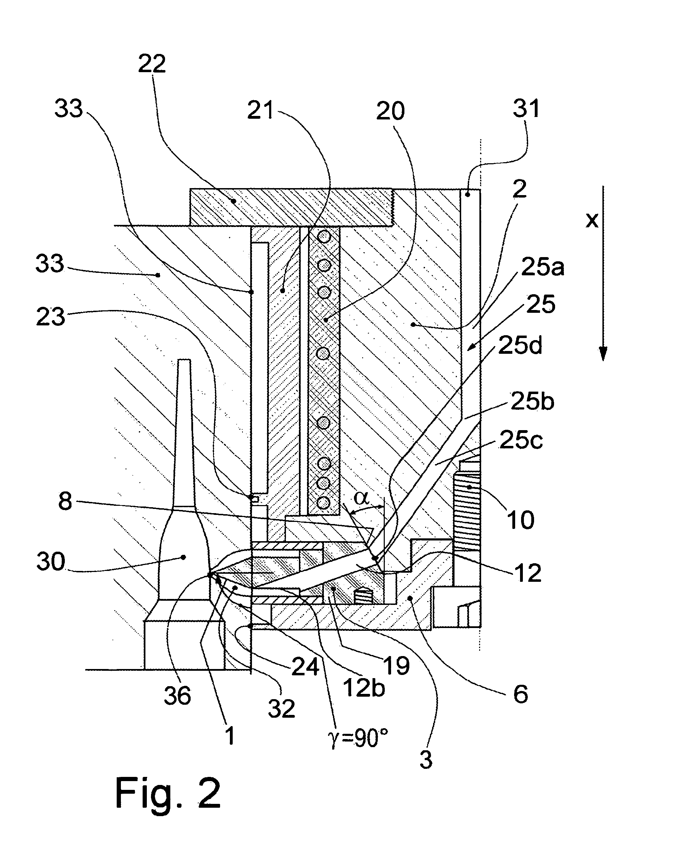

An seiner gegenüberliegenden - in Fig. 1 oberen - Axialseite weist der Düsenkörper-Basisabschnitt 2 eine Schmelzeeintrittsöffnung 31 in einen Schmelzekanal 25 (siehe Fig. 2) auf, der sich zunächst über einen ersten Abschnitt 25a axial durch den Düsenkörper-Basisabschnitt 2 bis zu einer Verzweigung 25b erstreckt, von der strahlenartig Teilkanäle 25c abzweigen, welche jeweils in die Ausnehmungen 14 münden (Fig. 8).

Die Teilkanäle 25c fluchten mit Eintrittsöffnungen 12a von Schmelzekanälen 12 in den Spitzenelementen 3, welche in die Ausnehmungen 14 eingelegt sind.

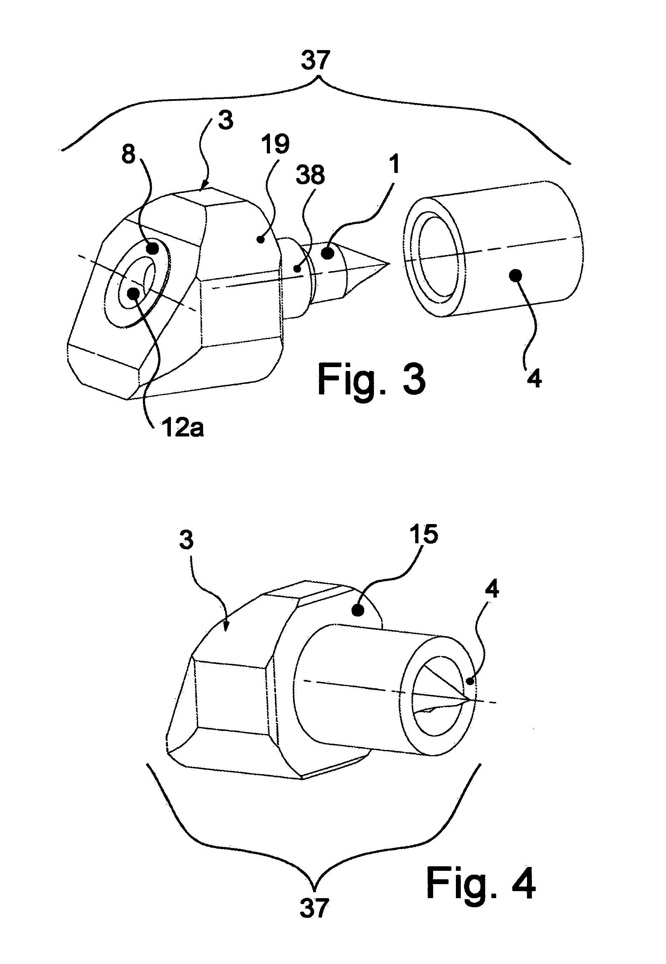

Die Spitzenelemente 3 (siehe Fig. 2 und 3) weisen jeweils einen Grundkörper 19 auf, an den sich jeweils eine Spitze 1 mit einem zylindrischen Bereich und einem sich radial nach außen anschließenden konischen bzw. spitzen Bereich anschließt, die im montierten Zustand am Düsenkörper-Basisabschnitt 2 (hier radial) nach außen zeigt und (hier weiter radial) im konischen Bereich über den Umfangsrand des Düsenkörper-Basisabschnitts 2 vorsteht (siehe wiederum Fig. 1 und Fig. 2).

Diese Spitzeneinsätze 37 sind derart ausgestaltet, dass sie nach einem Einlegen in die Ausnehmungen 5, 14 teilweise (vorzugsweise halb) umschlossen werden und sich mit ihrem Grundkörper 19 an ihren von der Spitze 1 jeweils abgewandten Bereich mit einer Schrägfläche 8 rückwärtig gegen eine Schrägfläche 11 sowie auf einer der eigentlichen Spitze 1 zugewandten Seite über eine Schulter 15 an einer entsprechenden Fläche 16 der Ausnehmung 14 abstützen (Siehe Fig. 3, 4, 5, 7 und 8). In der Schrägfläche 11 ist jeweils die Austrittsöffnung 25d aus dem Schmelzekanal 25 angeordnet und in der Schrägfläche 8 die Eintrittsöffnung 12a der Leitkanäle 12 in die Spitzenelemente 3.

Die Leitkanäle 12 weisen jeweils eine Austrittsöffnung 12b in eine ringraumartige Anschnittsausnehmung 32 auf, welcher die Düsenspitze 1 umgibt (Fig. 2), welche zum Teil durch eine auf den Grundkörper 19 montierte Dichthülse 4 gebildet ist.

Der mehrteilige Düsenkörper weist neben dem Düsenkörper-Basisabschnitt 2 den Düsenkörper-Klemmscheibenabschnitt 6 auf, der an seiner zum Düsenkörper-Basisabschnitt weisenden Axialseite mit einem umlaufenden Rand 28 versehen ist, der eine mittige Ausnehmung 17 umfasst, wobei der Rand 28 an der im montierten Zustand zu den Ausnehmungen 5, 14 des Düsenkörpers 2 versehenen Axialseite mit radial ausgerichteten Ausnehmungen 7 versehen ist, in welche die Spitzeneinsätze 37 eingreifen und welche im montierten Zustand den Ausnehmungen 14 gegenüberliegen.

Der Düsenkörper-Klemmscheibenabschnitt 6 begrenzt im Zusammenwirken mit der Dichthülse 4 den Bereich, welchen die Schmelze beim Durchtreten des Düsenkörpers durchfließt, nach unten hin und stabilisiert dabei die Dichthülse 4 an ihrem Umfang.

Der Düsenkörper-Klemmscheibenabschnitt 6 wird hier in einfacher Weise mittels wenigstens einer oder mehreren Befestigungsschrauben 9, 10, welche Bohrungen des Düsenkörper-Klemmscheibenabschnitts 6 durchsetzen und welche in Gewinde aufweisende Bohrungen 29 des Düsenköpers von dessen Axialseite her eingeschraubt sind, am Düsenkörper-Basisabschnitt 2 gehalten.

Es ist denkbar, nur eine einzige Befestigungsschraube 10 vorzusehen, vorzugsweise eine in der Mittellängslachse des Düsenkörper-Basisabschnittes 2 verlaufende, entsprechend dimensionierte, Befestigungsschraube 10. Die Wirkung dieser Befestigungsschraube 10 kann durch eine oder mehrere vorzugsweise auf einem konzentrischen Kreis um die mittlere Befestigungsschraube 10 angeordnete Befestigungsschrauben 9 unterstützt werden, die auch kleiner dimensioniert werden können als die mittlere Befestigungsschraube 10.

Der axial zum Düsenkörper-Basisabschnitt 2 ausgerichtete Düsenkörper-Klemmscheibenabschnitt 6 mit einer Ausnehmung 17 fixiert die Spitzenelemente 3 kraft- und formschlüssig an dem Düsenkörper-Basisabschnitt 2 derart, dass die Dichtfläche 8 des Düsenelements 3 an der Fläche 11 des Düsenkörpers 2 mit hoher Flächenpressung dichtend anliegt.

Die Düsenspitzen 1 stehen radial über den Außenumfang des Düsenkörper-Klemmscheibenabschnitts 6 und des Düsenkörper-Basisabschnitts 2 nach außen vor.

Ohne den Düsenkörper-Klemmscheibenabschnitt 6 würden die Spitzenelemente 3 nicht am Düsenkörper-Basisabschnitt 2 gehalten und der Schmelzeweg in das Werkzeug wäre nicht vollständig.

Im montierten Zustand stützt sich jedes Spitzenelement 3 mit einer radial nach außen gerichteten Schulter 15 an der entsprechenden Fläche 16 der Ausnehmung 14 des Düsenkörpers 2 ab.

Der Düsenkörper-Basisabschnitt 2 wird vorzugsweise an seinem von der Axialseite mit den Ausnehmungen 5, 14 abgewandten Seite von mindestens einem Heizelement 20 umschlossen, welches wiederum durch eine äußere Hülse 21, welche einen Sekundärdichtbund 23 trägt, umschlossen ist. Ein Stütz- und Zentrierring 22 fixiert das Heizelement 20 sowie die Hülse 21 und ist formschlüssig, z. B. mit einem Gewinde, an dem Düsenkörper-Basisabschnitt 2 befestigt.

Auch der Düsenkörper-Klemmscheibenabschnitt 6 trägt einen Sekundärdichtbund 24.

Die Spitze 1 ist derart ausgelegt und angeordnet, dass sie im montierten Zustand die Oberfläche des zu spritzenden Artikels 30 erreicht und nach Komplettmontage aller Bauteile der Schmelzefluss leckagefrei vom Schmelzeeintritt 31 bis zum Anschnitt 36 am Artikel geführt werden.

Dazu ist der Düsenkörper-Basisabschnitt 2 so ausgeführt, dass einer oder mehrere Spitzeneinsätze 37, bestehend aus dem eigentlichen Spitzenelement 3 und einer darauf montierten Dichthülse 4, in die entsprechenden Ausnehmungen 5, 14 am Düsenkörper-Basisabschnitt so eingesetzt werden können, dass die Spitze 1 jeweils die Artikeloberfläche erreicht (siehe Fig. 3 - 5).

Die Ausnehmungen 5 am Düsenkörper-Basisabschnitt umfassen in dieser Situation den Spitzeneinsatz 37 nur teilweise, z.B. nur bis zur halben Höhe (siehe Fig. 8). Erst die Montage des Düsenkörper-Klemmscheibenabschnitts 6, in dem korrespondierende Ausnehmungen 7 vorhanden sind, fixiert die Spitzeneinsätze 37.

Nach der Montage der Spitzeneinsätze 37 liegen die Dichthülsen 4 an der Wand 34 des Werkzeugeinsatzes 33 an, bzw. sind so weit beabstandet, dass nach Erreichen der Betriebstemperatur, durch die thermische Ausdehnung der Gesamtdüse, eine hinreichende Flächenpressung zwischen der Dichthülse 4 und der Wandung 34 des Werkzeugeinsatzes 33 entsteht. Die Dichthülse 4 liegt über einen Teil ihrer axialen Länge auf einem zylindrischen Absatz 38 des Spitzenelementes 3 auf, der sich an den Grundkörper 19 anschließt (Fig. 3 - 5). Vorteilhaft ist, dass die Dichthülsen 4 an ihrem Außenumfang nicht von Kunststoff benetzt werden, was zu einer guten Demontierbarkeit der Anordnung beiträgt.

Es ist alternativ auch denkbar, den wenigstens einen Spitzeneinsatz 37, d.h. das Spitzenelement 3 mit der Dichthülse 4, einstückig herzustellen oder auszubilden.

Die rückseitige Kontaktfläche 8 des Spitzenelementes 3 ist unter einem bestimmten Winkel α spitzwinklig zur Axialrichtung X (Fig. 2) ausgeführt, damit durch das Anziehen der Befestigungsschrauben 9, 10 des Düsenkörper-Klemmscheibenabschnitts 6 das Spitzenelement 3 gegen die mit gleichem Winkel ausgeführte Druckfläche 11 des Düsenkörpers 2 gedrückt wird. α ist vorzugsweise größer als 5°, insbesondere liegt α zwischen 10 und 65° (Fig. 2, Fig. 3, Fig. 7).

Die Winkelausführung führt dazu, dass durch die eingebrachten axialen Schraubenkräfte eine hohe Flächenpressung zwischen der rückwärtigen Fläche 8 des Spitzenelementes 3 und der entsprechenden Gegenfläche 11 des Düsenkörper-Basisabschnitts 2 entsteht.

Dies ist notwendig, da über diese Fläche der Schmelzekanal 12 zu den Spitzenelementen 3 mit dem Teilkanal 25c verbunden wird und damit die Dichtigkeit bzw. die Leckagefreiheit zwischen dem Schmelzekanal 12 und dem Teilkanal 25c sichergestellt wird. Damit ist der Schmelzekanal vom Bereich 25 durch den Bereich 12 hindurch bis zum Anschnitt 36 ein dichter Kanal.

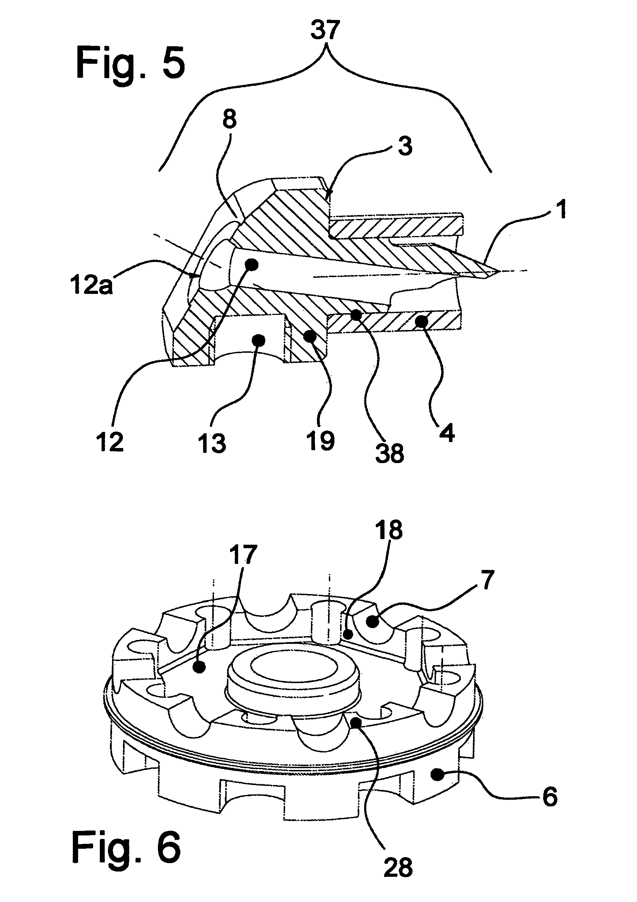

Damit die Axialkraft uneingeschränkt auf die Spitzenelemente 3 einwirken kann, muss der Düsenkörper-Klemmscheibenabschnitt 6 so ausgeführt werden, dass er nur auf die Spitzenelemente drückt; weiterhin müssen sich die Spitzenelemente 3 mit ihrer Schulter 15 an der Fläche 16 des Düsenkörper-Basisabschnitts 2 und ggf. an der Fläche 18 (Fig. 6) des Düsenkörper-Klemmscheibenabschnitts 6 abstützen können.

Durch die thermische Ausdehnung der gesamten Seitenanspritzdüsen werden die Dichthülsen 4 gegen die Werkzeugwandung 34 gedrückt. Dadurch wird die Dichtwirkung zwischen dem Schmelzekanal 12 des Spitzenelementes 3 und der Anschnittsausnehmung 32 im Werkzeugeinsatz 33 hergestellt.

Die Reaktionskraft zwischen den Dichthülsen 4 und der Werkzeugwandung 34 entlastet zwar die Verspannungssituation zwischen dem Spitzenelement 3 und dem zweiteiligen Düsenkörper 2, 6 aber die Dichtkraft auf der rückwärtigen Seite des Spitzenelementes 3, d.h. des Schmelzekanalübergangs vom Düsenkörper 2 wird dadurch nicht entlastet, sondern die Flächenpressung wird in der Regel noch erhöht.

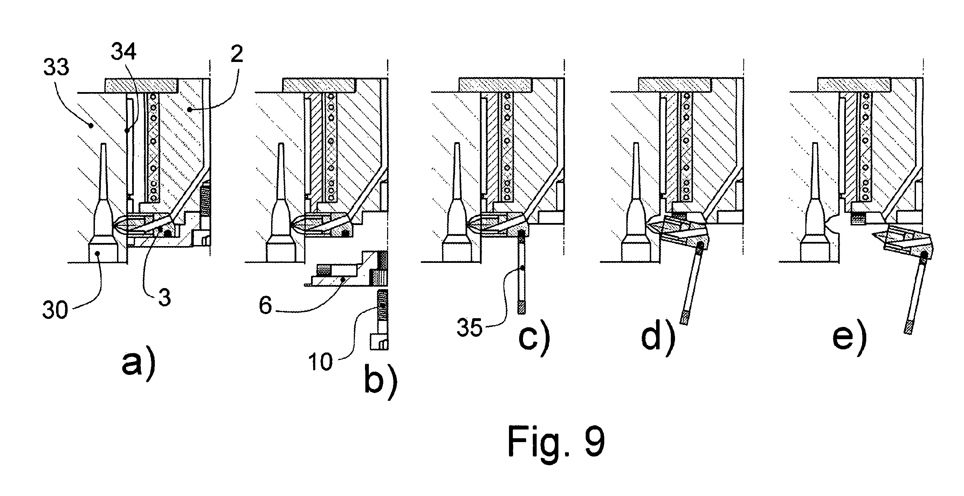

Ein besonderer Vorteil dieser Konstruktion besteht wie aus Fig. 9 ersichtlich - darin, dass die Spitzeneinsätze 37 nach dem Herausschrauben des Düsenkörper-Klemmscheibenabschnitts 6 leicht demontiert werden können, indem mittels eines Werkzeugs an einer Betätigungskontur das zerstörungsfreie, hier schwenkende, Herauslösen der Spitzeneinsätze 37 ermöglicht wird.

So kann nach der in Fig. 9 dargestellten Variante vorteilhaft vorgesehen sein, dass mittels eines Gewindestifts 35, der in eine vorgesehene Gewindebohrung 13 eingeschraubt wird, eine Hebelanordnung entsteht, die das zerstörungsfreie Lösen des Spitzeneinsatzes 37 ermöglicht.

Alternativ kann die Betätigungskontur ein Betätigungsansatz oder eine Betätigungsausnehmung sein (hier nicht dargestellt), die das Ansetzen eines Hebelelementes erlaubt (hier nicht dargestellt).

Dabei ist entscheidend, dass zunächst die verspannten winkeligen Flächen mittels der Hebelanordnung getrennt werden können, womit der Kraftverbund gelöst wird. Die gelösten Spitzeneinsätze 37 können dann durch Drehen und Verschieben demontiert werden.

Während die vorstehenden Ausführungsbeispiele jeweils eine Seitenanspritzung in horizontaler Richtung, das heißt in einem Winkel von 90° zur Hauptöffnungsrichtung X der Heißkanaldüse zeigen, ist es durch die vorteilhafte Art der vorzugsweise schwenkenden Montage der Spitzeneinsätze 37' auch möglich, über diesen Standard-Winkel von 90° hinaus bei der Seitenanspritzung weitere Anspritzwinkel γ zu realisieren, die zum Beispiel 45° bis hin zu 0° erreichen können, wobei γ = 90° die radial nach außen verlaufende Richtung beschreibt und γ = 0° die Richtung senkrecht nach unten, die hier der axialen Richtung X bzw. Montagerichtung X entspricht.

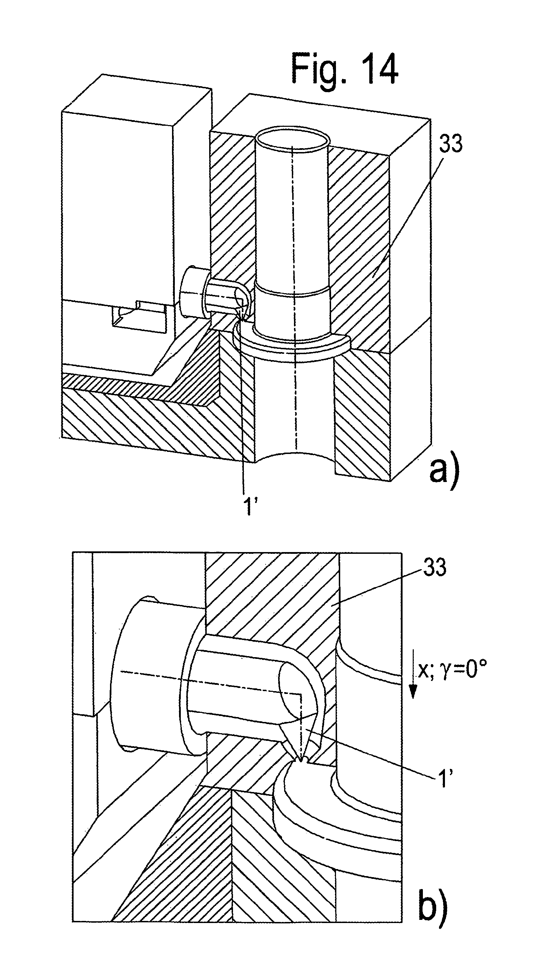

Das schwenkende Einbauen bzw. Herauslösen der Spitzeneinsätze 37' ermöglicht das Erreichen auch hinterschnittiger Vorkammergeometrien (Fig. 14, 15, 16).

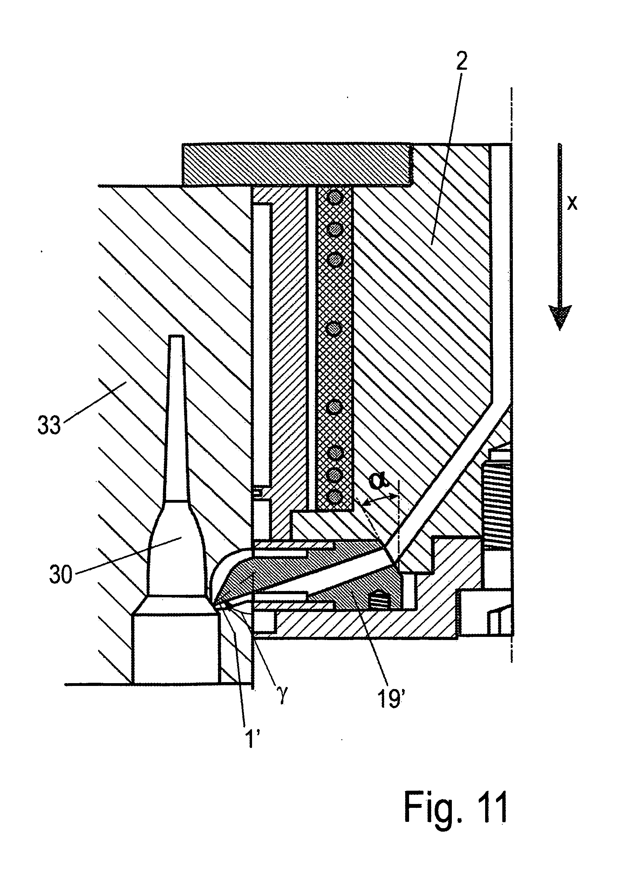

Die Spitzeneinsätze 37' bleiben dabei in ihrer "Hauptachse" senkrecht zur Axialrichtung X ausgerichtet und nur die eigentlich konische Spitze 1' selbst wird im erforderlichen Winkel γ, z.B. γ = 30°, 45° oder 0°, abgewinkelt zur Axialrichtung/Montagerichtung X im Bezug auf den Düsenkörper-Klemmscheibenabschnitt 6 ausgebildet (siehe Fig. 11).

Die "horizontale" Hauptachse (d.h. 90° zur Richtung X) der Spitzeneinsätze 37' ist vorteilhaft, weil sich damit die Dichthülse 4 nach wie vor horizontal durch thermische Ausdehnung an den Düsenkörper-Basisabschnitt anleget, wie vorstehend zu Fig. 1 - 9 beschrieben, wodurch die zuverlässige Dichtung zwischen der Heißkanaldüse und dem Werkzeugeinsatz 33 hergestellt wird.

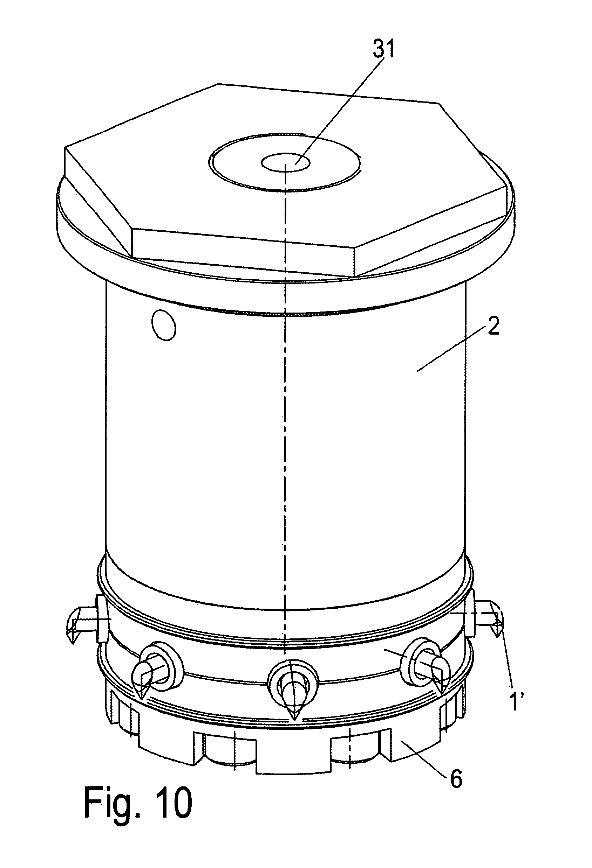

Nach den Ausführungsbeispielen der Fig. 10 bis 17 weisen die Spitzenelemente 3' damit jeweils wiederum einen Grundkörper 19' auf, an den sich jeweils eine Spitze 1' mit einem zunächst zylindrischen Bereich 1a' mit horizontaler Achse und einem sich unter einem Winkel zum zylindrischen Bereich nach außen anschließenden konischen Spitzenbereich 1b' anschließt.

Vorzugsweise steht der zylindrische Bereich 1a' im montierten Zustand am Düsenkörper 1 über den Umfangsrand des Düsenkörper-Basisabschnittes 1 nach außen vor und der Spitzenbereich 1b' ist schräg zur Achse des zylindrischen Bereiches ausgerichtet.

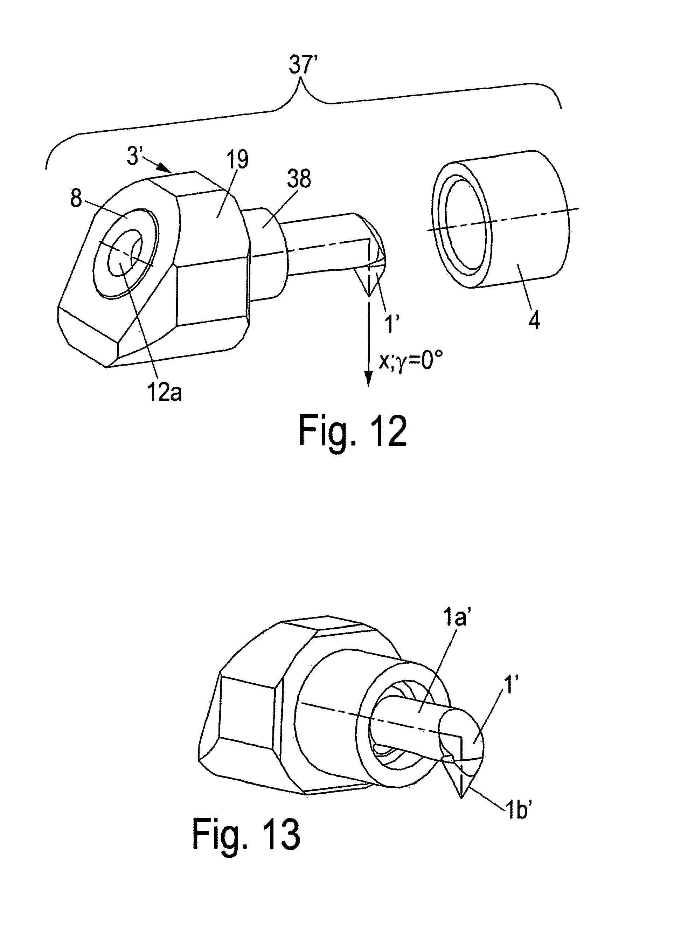

Die Spitzeneinsätze 37' weisen, wie in Fig. 12 und 13 gut zu erkennen, die relativ zur Horizontalausrichtung (d.h. senkrecht zur Axialrichtung X) abgewinkelten Spitzen 1' auf. Der besonders hervorzuhebende Vorteil dieser Auslegung der Spitzen 1' ist die Möglichkeit zur Anspritzung von Kunststoffbauteilen bei ungeteilten Formeinsätzen unter Winkeln, die von der horizontalen Lage (90°) abweichen und ohne Einschränkung bis 0° reichen können.

Der abgewinkelte Bereich der Spitzen 1' darf die Kontur der Anschnittsausnehmung des Werkzeuges hinterschneiden, da durch das Einschwenken bei der Montage die entsprechenden Gegenkonturen der Form umgangen werden können.

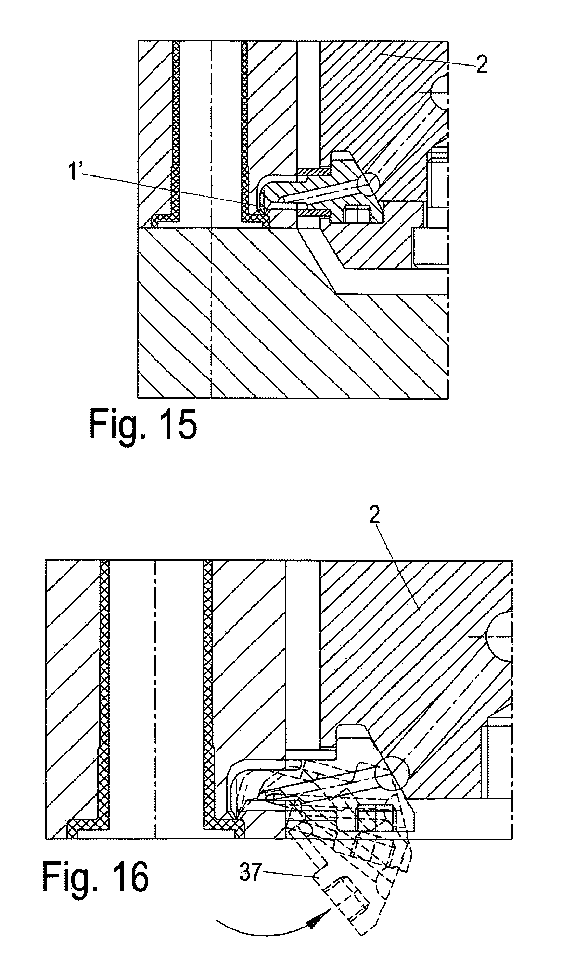

Damit können zum Beispiel Artikel wie Einmalspritzen an dem Griffstück unter 0° angespritzt werden (Fig. 14 und 15) oder Artikel wie Pipetten auf einer Schulter unter 45° (Fig. 11).

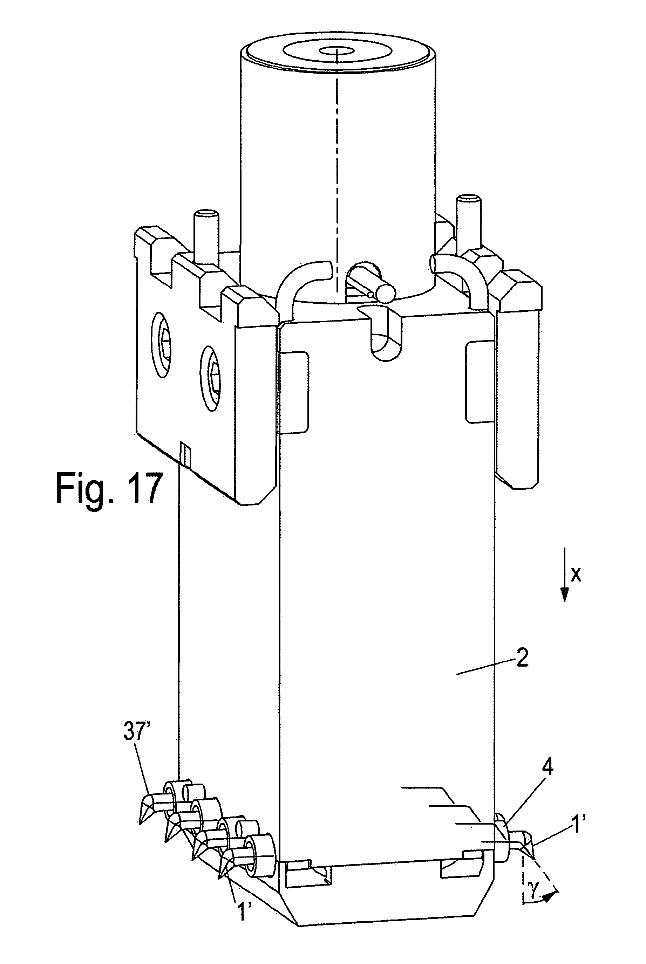

Ausführungsformen von Heißkanaldüsen mit derartigen Spitzeneinsätzen sind in Fig. 13 und Fig. 14 dargestellt. Nach Fig. 13 sind die Spitzeneinsätze 37' radial nach außen gerichtet, während sie bei dem in Fig. 17 dargestellten rechteckigen Düsenkörper in zwei nebeneinander liegenden Reihen mit voneinander fort weisenden Spitzen 1' ausgerichtet sind.

### Bezugszeichenliste

| | |
|---|---|
| Spitze | 1, 1' |
| zylindrischer Bereich | 1a' |
| Spitzenbereich | 1b' |
| Düsenkörper-Basisabschnitt | 2 |
| Spitzenelement | 3, 3' |
| Dichthülse | 4 |
| Ausnehmungen | 5 |
| Düsenkörper-Klemmscheibenabschnitt | 6 |
| Ausnehmungen | 7 |
| Kontaktfläche | 8 |
| Befestigungsschrauben | 9, 10 |
| Druckfläche | 11 |
| Schmelzekanal | 12 |
| Eintritts-/Austrittsöffnungen | 12a, b |
| Gewindebohrung | 13 |
| Ausnehmung | 14 |
| Schulter | 15 |
| Fläche | 16 |
| Ausnehmung | 17 |
| Fläche | 18 |
| Grundkörper | 19, 19' |
| Heizelement | 20 |
| Hülse | 21 |
| Stütz- und Zentrierring | 22 |
| Sekundärdichtbund | 23, 24 |
| Schmelzekanal | 25 |
| Abschnitt | 25a |
| Verzweigung | 25b |
| Teilkanal | 25c |
| Austritt | 25d |
| Rand | 28 |
| Gewindebohrungen | 29 |
| zu spritzender Artikel | 30 |
| Schmelzeeintritt | 31 |
| Anschnittausnehmung | 32 |
| Werkzeugeinsatz | 33 |
| Werkzeugwandung | 34 |
| Gewindestift | 35 |
| Anschnitt | 36 |
| Spitzeneinsatz | 37, 37' |
| Absatz | 38 |
| Axialrichtung | X |

## Patentansprüche

1. Heißkanaldüse für das seitliche Anspritzen von Kunststoffbauteilen, die einen mehrteiligen Düsenkörper aufweist, der wenigstens eines oder mehrere Spitzenelemente (3, 3') aufweist, die über die Umfangsfläche des Düsenkörpers nach außen vorstehen, **dadurch gekennzeichnet, dass** der Düsenkörper einen Düsenkörper-Basisabschnitt (2) mit einer Axialseite aufweist, die mit wenigstens einer oder mehreren an der Axialseite verteilt angeordneten Ausnehmungen (5, 14) zum Anordnen und zur Teilaufnahme des wenigstens einen Spitzenelements (3, 3') oder der Spitzenelemente (3, 3') versehen ist, die mit einem Düsenkörper-Klemmscheibenabschnitt (6) an die Axialseite des Düsenkörper-Basisabschnitts (2) gepresst sind.

2. Heißkanaldüse nach Anspruch 1, **dadurch gekennzeichnet, dass** der Düsenkörper-Basisabschnitt (2) einen kreisrunden, einen elliptischen, einen ovalen oder einen mehreckigen Querschnitt aufweist.

3. Heißkanaldüse nach Anspruch 1 oder 2, **dadurch gekennzeichnet, dass** die Ausnehmungen (5) radial an der Axialseite umfangsverteilt ausgerichtet sind.

4. Heißkanaldüse nach einem der vorstehenden Ansprüche, **dadurch gekennzeichnet, dass** die Spitzenelemente (3, 3') jeweils mit einer Dichthülse (4) einen Spitzeneinsatz (37, 37') ausbilden.

5. Heißkanaldüse nach Anspruch 1, 2, 3 oder 4, **dadurch gekennzeichnet, dass** der Düsenkörper-Basisabschnitt (2) eine Schmelzeeintrittsöffnung (31) in einen Schmelzekanal (25) aufweist, der einen ersten Abschnitt (25a) aufweist, der sich axial durch den Düsenkörper-Basisabschnitt (2) bis zu einer Verzweigung (25b) erstreckt, von der winklig wenigstens einer oder mehrere Teilkanäle (25c) abzweigen, welche jeweils in die Ausnehmungen (14) münden.

6. Heißkanaldüse nach einem der vorstehenden Ansprüche, **dadurch gekennzeichnet, dass** die Teilkanäle (25c) mit Eintrittsöffnungen (12a) von Schmelzekanälen (12) in den Spitzeneinsätzen (37), insbesondere deren Spitzenelementen (3, 3'), fluchten, welche in die Ausnehmungen (5, 14) eingelegt sind.

7. Heißkanaldüse nach einem der vorstehenden Ansprüche, **dadurch gekennzeichnet, dass** der Düsenkörper-Klemmscheibenabschnitt (6) derart ausgestaltet ist, dass er nur auf die Spitzenelemente (3, 3') drückt.

8. Heißkanaldüse nach einem der vorstehenden Ansprüche, **dadurch gekennzeichnet, dass** Spitzeneinsätze, insbesondere deren Spitzenelemente (3, 3'), derart ausgestaltet sind, dass sie nach einem Einlegen in die Ausnehmungen (14) teilweise - insbesondere halb - von diesen umschlossen sind.

9. Heißkanaldüse nach einem der vorstehenden Ansprüche, **dadurch gekennzeichnet, dass** sich die Spitzenelemente (3, 3') - vorzugsweise im Bereich des Grundkörpers (19) - mit einer Schrägfläche (8) gegen eine Schrägfläche (11) in der jeweiligen Ausnehmung (14) abstützen.

10. Heißkanaldüse nach einem der vorstehenden Ansprüche, **dadurch gekennzeichnet, dass** sich die Spitzenelemente (3) auf ihrer der Spitze zugewandten Seite über eine Schulter (15) an einer der Spitze (1) abgewandten Fläche (16) des Düsenkörper-Basisabschnitts (2) in der Ausnehmung (14) abstütze.

11. Heißkanaldüse nach einem der vorstehenden Ansprüche, **dadurch gekennzeichnet, dass** sich die Fläche (15) ferner an einer Fläche (18) des Düsenkörper-Klemmscheibenabschnitts (6) abstützt.

12. Heißkanaldüse nach einem der vorstehenden Ansprüche, **dadurch gekennzeichnet, dass** sich die Spitzenetemente (3, 3') auf ihrer der Spitze zugewandten Seite über eine Schulter (15) und an ihrer von der Spitze (1, 1') jeweils abgewandten Seite mit der Schrägfläche (8) in der Ausnehmung (14) abstützen.

13. Heißkanaldüse nach einem der vorstehenden Ansprüche, **dadurch gekennzeichnet, dass** in den Schrägflächen (8, 11) die Schmelzekanäle (25, 12) münden.

14. Heißkanaldüse nach einem der vorstehenden Ansprüche, **dadurch gekennzeichnet, dass** die Schmelzekanäle (12) jeweils eine Austrittsöffnung (12b) in eine ringraumartige Anschnittsausnehmung (32) aufweisen, welcher die Düsenspitze (1,1') umgibt.

15. Heißkanaldüse nach einem der vorstehenden Ansprüche, **dadurch gekennzeichnet, dass** der Düsenkörper-Klemmscheibenabschnitt (6) mit einem umlaufenden axialen Rand (28) versehen ist, der eine mittige Ausnehmung (17) umschließt, wobei der Rand (28) an der im montierten Zustand zu den Ausnehmungen (5, 14) des Düsenkörper-Basisabschnitts (2) gewandten Axialseite die Ausnehmungen (7) aufweist, in welche die Spitzeneinsätze (37) eingreifen.

16. Heißkanaldüse nach einem der vorstehenden Ansprüche, **dadurch gekennzeichnet, dass** der Düsenkörper-Klemmscheibenabschnitt (6) mittels wenigstens einer Befestigungsschraube (10) am Düsenköper-Basisabschnitt (2) gehalten ist, die vorzugsweise mit der Mittellängsachse des Düsenkörper-Basisabschnitts (2) fluchtet.

17. Heißkanaldüse nach einem der vorstehenden Ansprüche, **dadurch gekennzeichnet, dass** der Düsenkörper-Klemmscheibenabschnitt (6) mittels mehreren Befestigungsschrauben (9, 10) am Düsenköper gehalten ist.

18. Heißkanaldüse nach Anspruch 17, **dadurch gekennzeichnet, dass** der Düsenkörper-Klemmscheibenabschnitt (6) ferner mittels weiteren um die mittlere Befestigungsschraube (10) vorzugsweise auf einem Kreis angeordneten Befestigungsschrauben (9) am Düsenköper-Basisabschnitt (2) gehalten ist.

19. Heißkanaldüse nach einem der vorstehenden Ansprüche, **dadurch gekennzeichnet, dass** die Befestigungsschrauben (9, 10) Bohrungen des Düsenkörper-Klemmscheibenabschnitts (6) durchsetzen und in Axialbohrungen (29) des Düsenköper-Basisabschnitts eingeschraubt sind.

20. Heißkanaldüse nach einem der vorstehenden Ansprüche, **dadurch gekennzeichnet, dass** der Düsenkörper-Basisabschnitt (2) von mindestens einem Heizelement (20) umschlossen ist, welches wiederum durch eine äußere Hülse (21), welche einen Sekundärdichtbund (23) trägt, umschlossen ist.

21. Heißkanaldüse nach einem der vorstehenden Ansprüche, **dadurch gekennzeichnet, dass** ein Stütz- und Zentrierring (22) das Heizelement (20) sowie die Hülse (21) fixiert und im montierten Zustand an dem Düsenkörper-Basisabschnitt (2) befestigt ist.

22. Heißkanaldüse nach einem der vorstehenden Ansprüche, **dadurch gekennzeichnet, dass** der Düsenkörper-Klemmscheibenabschnitt (6) einen Sekundärdichtbund (24) aufweist.

23. Heißkanaldüse nach einem der vorstehenden Ansprüche, **dadurch gekennzeichnet, dass** die Dichthülsen (4) mit den Spitzenelementen (3, 3') kraft- und/oder formschlüssig verbunden sind.

24. Heißkanaldüse nach einem der vorstehenden Ansprüche, **dadurch gekennzeichnet, dass** die Dichthülsen (4) auf die Spitzenelemente (3) aufgesetzt sind.

25. Heißkanaldüse nach einem der vorstehenden Ansprüche, **dadurch gekennzeichnet, dass** die Dichthülsen (4) jeweils auf einen Absatz (38) der Spitzenelemente (3, 3') aufgesetzt sind.

26. Heißkanaldüse nach einem der vorstehenden Ansprüche, **dadurch gekennzeichnet, dass** die Dichthülsen (4) einstückig mit den Spitzenelementen (3, 3') ausgebildet oder hergestellt sind.

27. Heißkanaldüse nach einem der vorstehenden Ansprüche oder nach dem Oberbegriff des Anspruchs 1, **dadurch gekennzeichnet, dass** die Spitzenelemente (3, 3') eine Betätigungskontur für ein Montage- und/oder Demontagewerkzeug aufweisen.

28. Heißkanaldüse nach Anspruch 29, **dadurch gekennzeichnet, dass** die Betätigungskontur eine Gewindebohrung (13) für einen Gewindestift (35) als Montage- und/oder Demontagewerkzeug ist.

29. Heißkanaldüse nach Anspruch 30, **dadurch gekennzeichnet, dass** die Betätigungskontur eine Ansatzkontur für einen Hebel als das Montage- und/oder Demontagewerkzeug ist.

30. Heißkanaldüse nach einem der vorstehenden Ansprüche, **dadurch gekennzeichnet, dass** die Spitzeneinsätze (37) abgewinkelte Spitzen (1') aufweisen.

31. Heißkanaldüse nach einem der vorstehenden Ansprüche, **dadurch gekennzeichnet, dass** die abgewinkelten Spitzen (1') der Spitzeneinsätze (37) in einem Winkel zwischen 0° und 90°, vorzugsweise zwischen 0° und 45° zur Axialrichtung (X) des Düsenkörper Klemmscheibenabschnittes (6) ausgerichtet sind.

32. Heißkanaldüse nach einem der vorstehenden Ansprüche, **dadurch gekennzeichnet, dass** die Spitzenelemente (3, 3') jeweils einen Grundkörper (19) aufweisen, an den sich jeweils eine Spitze (1, 1') mit einem zunächst zylindrischen Bereich und einem sich radial nach außen anschließenden konischen Bereich anschließt, die im montierten Zustand am Düsenkörper nach außen zeigt und über den Umfangsrand des Düsenkörpers vorsteht.

33. Heißkanaldüse nach einem der vorstehenden Ansprüche, **dadurch gekennzeichnet, dass** die Spitzenelemente (3, 3') jeweils einen Grundkörper (19) aufweisen, an den sich jeweils eine Spitze (1') mit einem zunächst zylindrischen Bereich und einem sich unter einem Winkel (γ) größer 0° zum zylindrischen Bereich nach außen anschließenden konischen Bereich anschließt, die im montierten Zustand am Düsenkörper schräg zur Axialrichtung (X) des Düsenkörper-Basisabschnittes über den Umfangsrand des Düsenkörpers vorsteht.

## Claims

1. A hot runner nozzle for lateral injection of plastic components, comprising a multipart nozzle body having at least one or several tip elements (3, 3') which protrude outwardly over the circumferential area of the nozzle body, **characterized in that** the nozzle body comprises a nozzle body base section (2) with an axial side which is provided with at least one or several recesses (5, 14) arranged in a distributed manner on the axial side for arranging and partly accommodating the at least one tip element (3, 3') or the tip elements (3, 3'), which are pressed with a nozzle body clamping disk section (6) against the axial side of the nozzle body base section (2).

2. A hot runner nozzle according to claim 1, **characterized in that** the nozzle body base section (2) has a circular, elliptical, oval or polygonal cross section.

3. A hot runner nozzle according to claim 1 or 2, **characterized in that** the recesses (5) are aligned on the axial side in a radially circumferentially distributed manner.

4. A hot runner nozzle according to one of the preceding claims, **characterized in that** the tip elements (3, 3') form a tip insert (37, 37') with one sealing sleeve (4) each.

5. A hot runner nozzle according to claim 1, 2, 3 or 4, **characterized in that** the nozzle body base section (2) comprises a melt entrance opening (31) into a melt channel (25) having a first section (25a) which extends axially through the nozzle body base section (2) up to a branching (25b), from which at least one or several partial channels (25c) branch off in an angular manner, which partial channels each open into the recesses (14).

6. A hot runner nozzle according to one of the preceding claims, **characterized in that** the partial channels (25c) are in alignment with entrance openings (12a) of melt channels (12) in the tip inserts (37), especially their tip elements (3, 3'), which are inserted in the recesses (5, 14).

7. A hot runner nozzle according to one of the preceding claims, **characterized in that** the nozzle body clamping disk section (6) is arranged in such a way that it only presses on the tip elements (3, 3').

8. A hot runner nozzle according to one of the preceding claims, **characterized in that** tip inserts, especially their tip elements (3, 3'), are arranged in such a way that after the insertion in the recesses (14) they are enclosed partly, and especially half, by them.

9. A hot runner nozzle according to one of the preceding claims, **characterized in that** the tip elements (3, 3') rest with an oblique surface (8) against an oblique surface (11) in the respective recess (14), preferably in the region of the base body (19).

10. A hot runner nozzle according to one of the preceding claims, **characterized in that** the tip elements (3) rest on their side facing the tip via a shoulder (15) on a surface (16) of the nozzle body base section (2) in the recess (14), which surface faces away from the tip (1).

11. A hot runner nozzle according to one of the preceding claims, **characterized in that** the surface (15) further rests on a surface (18) of the nozzle body clamping disk section (6).

12. A hot runner nozzle according to one of the preceding claims, **characterized in that** the tip elements (3, 3') rest in the recess (14) via a shoulder (15) on their side facing the tip and via an oblique surface (8) on their side facing away from the tip (1, 1').

13. A hot runner nozzle according to one of the preceding claims, **characterized in that** the melt channels (25, 12) open into the oblique surfaces (8, 11).

14. A hot runner nozzle according to one of the preceding claims, **characterized in that** the melt channels (12) each comprise an outlet opening (12b) into an annular gating recess (32) which encloses the nozzle tip (1, 1').

15. A hot runner nozzle according to one of the preceding claims, **characterized in that** the nozzle body clamping disk section (6) is provided with a circumferential axial edge (28) which encloses a central recess (17), wherein the edge (28) comprises the recesses (7) on the axial side facing in the mounted state towards the recesses (5, 14) of the nozzle body base section (2), with the tip inserts (37) engaging in said recesses.

16. A hot runner nozzle according to one of the preceding claims, **characterized in that** the nozzle body clamping disk section (6) is held by means of at least one fastening screw (10) on the nozzle body base section (2) which preferably aligns with the central longitudinal axis of the nozzle body base section (2).

17. A hot runner nozzle according to one of the preceding claims, **characterized in that** the nozzle body clamping disk section (6) is held by means of several fastening screws (9, 10) on the nozzle body.

18. A hot runner nozzle according to claim 17, **characterized in that** the nozzle body clamping disk section (6) is further held on the nozzle body base section (2) by means of further fastening screws (9) which are arranged about the central fastening screw (10) preferably in a circle.

19. A hot runner nozzle according to one of the preceding claims, **characterized in that** the fastening screws (9, 10) penetrate bores of the nozzle body clamping disk section (6) and are screwed into axial bores (29) of the nozzle body base section.

20. A hot runner nozzle according to one of the preceding claims, **characterized in that** the nozzle body base section (2) is enclosed by at least one heating element (20), which on its part is enclosed by an outer sleeve (21) which carries a secondary sealing collar (23).

21. A hot runner nozzle according to one of the preceding claims, **characterized in that** a support and centering ring (22) fixes the heating element (20) and the sleeve (21), and is fastened to the nozzle body base section (2) in the mounted state.

22. A hot runner nozzle according to one of the preceding claims, **characterized in that** the nozzle body clamping disk section (6) comprises a secondary sealing collar (24).

23. A hot runner nozzle according to one of the preceding claims, **characterized in that** the sealing sleeves (4) are connected with the tip elements (3, 3') in an interlocking and/or friction-locked manner.

24. A hot runner nozzle according to one of the preceding claims, **characterized in that** the sealing sleeves (4) are placed on the tip elements (3).

25. A hot runner nozzle according to one of the preceding claims, **characterized in that** the sealing sleeves (4) are each placed on a shoulder (38) of the tip elements (3, 3').

26. A hot runner nozzle according to one of the preceding claims, **characterized in that** the sealing sleeves (4) are arranged or produced in an integral manner with the tip elements (3, 3').

27. A hot runner nozzle according to one of the preceding claims or according to the preamble of claim 1, **characterized in that** the tip elements (3, 3') have an actuating contour for a mounting and/or dismounting tool.

28. A hot runner nozzle according to claim 29, **characterized in that** the actuating contour is a threaded bore (13) for a threaded pin (35) as a mounting and/or dismounting tool.

29. A hot runner nozzle according to claim 30, **characterized in that** the actuating contour is an application contour for a lever as the mounting and/or dismounting tool.

30. A hot runner nozzle according to one of the preceding claims, **characterized in that** the tip inserts (37) comprise bent-off tips (1').

31. A hot runner nozzle according to one of the preceding claims, **characterized in that** the bent-off tips (1') of the tip inserts (37) are aligned at an angle of between 0° and 90°, preferably between 0° and 45°, in relation to the axial direction (X) of the nozzle body clamping disk section (6).

32. A hot runner nozzle according to one of the preceding claims, **characterized in that** the tip elements (3, 3') each comprise a base body (19), adjacent to which there is a tip (1, 1') with a firstly cylindrical area and a radially outwardly adjacent conical area which faces outwardly in the mounted state of the nozzle body and protrudes beyond the circumferential edge of the nozzle body.

33. A hot runner nozzle according to one of the preceding claims, **characterized in that** the tip elements (3, 3') each comprise a base body (19), adjacent to which there is a tip (1') with a firstly cylindrical area and an outwardly adjacent conical area under an angle (γ) which is larger than 0° relative to the cylindrical area, which tip protrudes in the mounted state on the nozzle body in an oblique manner in relation to the axial direction (X) of the nozzle body base section beyond the circumferential edge of the nozzle body.

## Revendications

1. Buse de canal chaud pour la pulvérisation latérale d'éléments en matière plastique, laquelle présente un corps de buse en plusieurs parties, lequel présente au moins un ou plusieurs éléments à pointe (3, 3') faisant saillie vers l'extérieur au-delà de la surface périphérique du corps de buse, **caractérisée en ce que** le corps de buse présente une section de base (2) de corps de buse avec un côté axial, qui est pourvu d'au moins un ou plusieurs évidements (5, 14) disposés de manière répartie au niveau du côté axial et servant à agencer et à recevoir partiellement l'élément à pointe (3, 3') ou les éléments de pointe (3, 3') pressés par une section de disque de serrage (6) du corps de buse contre le côté axial de la section de base (2) du corps de buse.

2. Buse de canal chaud selon la revendication 1, **caractérisée en ce que** la section de base (2) du corps de buse présente une section transversale circulaire, une section transversale elliptique, une section transversale ovale, ou une section transversale polygonale.

3. Buse de canal chaud selon la revendication 1 ou 2, **caractérisée en ce que** les évidements (5) sont orientés de manière répartie sur la périphérie radialement au niveau du côté axial.

4. Buse de canal chaud selon l'une quelconque des revendications précédentes, **caractérisée en ce que** les éléments à pointe (3, 3') forment respectivement avec une douille d'étanchéité (4) un insert à pointe (37, 37').

5. Buse de canal chaud selon la revendication 1, 2, 3 ou 4, **caractérisée en ce que** la section de base (2) du corps de buse présente un orifice d'entrée de masse fondue (31) dans un canal de coulée (25), qui présente une première section (25a) s'étendant axialement à travers la section de base (2) du corps de buse jusqu'à une déviation (25b), de laquelle dévient en formant un angle au moins un canal partiel ou plusieurs canaux partiels (25c), lesquels débouchent respectivement dans les évidements (14).

6. Buse de canal chaud selon l'une quelconque des revendications précédentes, **caractérisée en ce que** les canaux partiels (25c) sont au même niveau que des orifices d'entrée (12a) de canaux de coulée (12) dans les inserts à pointe (37), en particulier dans leurs éléments à pointe (3, 3'), lesquels sont placés dans les évidements (5, 14).

7. Buse de canal chaud selon l'une quelconque des revendications précédentes, **caractérisée en ce que** la section de disque de serrage (6) du corps de buse est configurée de telle manière qu'elle n'exerce une pression que sur les éléments à pointe (3, 3').

8. Buse de canal chaud selon l'une quelconque des revendications précédentes, **caractérisée en ce que** des inserts à pointe, en particulier leurs éléments à pointe (3, 3'), sont configurés de telle manière qu'ils sont entourés par les évidements (14), après avoir été placés dans ces derniers, partiellement, - en particulier à moitié.

9. Buse de canal chaud selon l'une quelconque des revendications précédentes, **caractérisée en ce que** les éléments à pointe (3, 3') s'appuient par une surface inclinée (8) contre une surface inclinée (11) dans l'évidement respectif (14), de préférence dans la zone du corps de base (19).

10. Buse de canal chaud selon l'une quelconque des revendications précédentes, **caractérisée en ce que** les éléments à pointe (3) s'appuient sur leur côté tourné vers la pointe, par l'intermédiaire d'un épaulement (15) contre une surface (16), opposée à la pointe (1), de la section de base (2) du corps de buse dans l'évidement (14).

11. Buse de canal chaud selon l'une quelconque des revendications précédentes, **caractérisée en ce que** la surface (15) s'appuie en outre contre une surface (18) de la section de disque de serrage (6) du corps de buse.

12. Buse de canal chaud selon l'une quelconque des revendications précédentes, **caractérisée en ce que** les éléments en pointe (3, 3') s'appuient sur leur côté tourné vers la pointe, par l'intermédiaire d'un épaulement (15) et au niveau de leur côté, opposé respectivement à la pointe (1, 1'), par la surface inclinée (8) dans l'évidement (14).

13. Buse de canal chaud selon l'une quelconque des revendications précédentes, **caractérisée en ce que** les canaux de coulée (25, 12) débouchent dans les surfaces inclinées (8, 11).

14. Buse de canal chaud selon l'une quelconque des revendications précédentes, **caractérisée en ce que** les canaux de coulée (12) présentent respectivement un orifice de sortie (12b) dans un évidement d'entrée (32) à la manière d'un espace annulaire, qui entoure la pointe de buse (1, 1').

15. Buse de canal chaud selon l'une quelconque des revendications précédentes, **caractérisée en ce que** la section de disque de serrage (6) du corps de buse est pourvue d'un bord (28) axial périphérique entourant un évidement (17) central, sachant que le bord (28) présente au niveau du côté axial tourné à l'état monté vers les évidements (5, 14) de la section de base (2) du corps de buse les évidements (7), avec lesquels les inserts à pointe (37) viennent en prise.

16. Buse de canal chaud selon l'une quelconque des revendications précédentes, **caractérisée en ce que** la section de disque de serrage (6) du corps de buse est maintenue au niveau de la section de base (2) du corps de buse au moyen au moins d'une vis de fixation (10), laquelle est au même niveau de préférence que l'axe longitudinal médian de la section de base (2) du corps de buse.

17. Buse de canal chaud selon l'une quelconque des revendications précédentes, **caractérisée en ce que** la section de disque de serrage (6) du corps de buse est maintenue au niveau du corps de buse au moyen de plusieurs vis de fixation (9, 10).

18. Buse de canal chaud selon la revendication 17, **caractérisée en ce que** la section de disque de serrage (6) du corps de buse est maintenue en outre au niveau de la section de base (2) du corps de buse au moyen de vis de fixation (9) supplémentaires disposées de préférence sur un cercle autour de la vis de fixation (10) centrale.

19. Buse de canal chaud selon l'une quelconque des revendications précédentes, **caractérisée en ce que** les vis de fixation (9, 10) traversent des alésages de la section de disque de serrage (6) du corps de buse, et sont vissés dans des alésages axiaux (29) de la section de base du corps de buse.

20. Buse de canal chaud selon l'une quelconque des revendications précédentes, **caractérisée en ce que** la section de base (2) du corps de buse est entourée par au moins un élément de chauffage (20), lequel est entouré à nouveau par une douille (21) extérieure, qui supporte une collerette étanche secondaire (23).

21. Buse de canal chaud selon l'une quelconque des revendications précédentes, **caractérisée en ce qu'**une bague de soutien et de centrage (22) fixe l'élément de chauffage (20) ainsi que la douille (21) et est fixée à l'état monté au niveau de la section de base (2) du corps de buse.

22. Buse de canal chaud selon l'une quelconque des revendications précédentes, **caractérisée en ce que** la section de disque de serrage (6) du corps de buse présente une collerette étanche secondaire (24).

23. Buse de canal chaud selon l'une quelconque des revendications précédentes, **caractérisée en ce que** les douilles étanches (4) sont reliées à force et/ou par complémentarité de forme aux éléments à pointe (3, 3').

24. Buse de canal chaud selon l'une quelconque des revendications précédentes, **caractérisée en ce que** les douilles étanches (4) sont placées sur les éléments à pointe (3).

25. Buse de canal chaud selon l'une quelconque des revendications précédentes, **caractérisée en ce que** les douilles étanches (4) sont respectivement placées sur un talon (38) des éléments à pointe (3, 3').

26. Buse de canal chaud selon l'une quelconque des revendications précédentes, **caractérisée en ce que** les douilles étanches (4) sont réalisées ou fabriquées d'un seul tenant avec les éléments à pointe (3, 3').

27. Buse de canal chaud selon l'une quelconque des revendications précédentes, ou selon le préambule de la revendication 1, **caractérisée en ce que** les éléments à pointe (3, 3') présentent un contour d'actionnement pour un outil de montage et/ou de démontage.

28. Buse de canal chaud selon la revendication 29, **caractérisée en ce que** le contour d'actionnement est un alésage fileté (13) pour une tige filetée (35) sous la forme d'un outil de montage et/ou de démontage.

29. Buse de canal chaud selon la revendication 30, **caractérisée en ce que** le contour d'actionnement est un contour d'embase pour un levier sous la forme d'un outil de montage et/ou de démontage.

30. Buse de canal chaud selon l'une quelconque des revendications précédentes, **caractérisée en ce que** les inserts à pointe (37) présentent des pointes (1') coudées.

31. Buse de canal chaud selon l'une quelconque des revendications précédentes, **caractérisée en ce que** les pointes (1') coudées des inserts à pointe (37) sont orientées selon un angle compris entre 0° et 90°, de préférence entre 0° et 45° par rapport à la direction axiale (X) de la section de disque de serrage (6) du corps de buse.

32. Buse de canal chaud selon l'une quelconque des revendications précédentes, **caractérisée en ce que** les éléments à pointe (3, 3') présentent respectivement un corps de base (19), auquel se raccorde respectivement une pointe (1, 1') présentant une zone tout d'abord cylindrique et une zone conique se raccordant radialement vers l'extérieur, laquelle pointe est orientée à l'état monté sur le corps de buse vers l'extérieur et fait saillie au-delà du bord périphérique du corps de buse.

33. Buse de canal chaud selon l'une quelconque des revendications précédentes, **caractérisée en ce que** les éléments à pointe (3, 3') présentent respectivement un corps de base (19), auquel se raccorde respectivement une pointe (1') présentant une zone en premier lieu cylindrique et une zone conique se raccordant vers l'extérieur selon un angle (γ) supérieur à 0° par rapport à la zone cylindrique, laquelle pointe fait saillie à l'état monté sur le corps de buse, de manière inclinée par rapport à la direction axiale (X) de la section de base du corps de buse au-delà du bord périphérique du corps de buse.
